# EUROPEAN PATENT SPECIFICATION

(11) **EP 2 644 305 B1**
(45) Date of publication and mention of the grant of the patent: **19.09.2018**
(21) Application number: 12760941.0
(22) Date of filing: 12.03.2012
(51) Int. Cl.: B23D 79/12, B21C 43/04

(54) **SHAVING TOOL**
RASIERWERKZEUG
OUTIL DE RASAGE

(30) Priority: 22.03.2011 JP 2011062721
(43) Date of publication of application: 02.10.2013
(73) Proprietor: Kabushiki Kaisha Kobe Seiko Sho (Kobe Steel, Ltd.), Kobe-shi, Hyogo 651-8585 (JP)
(72) Inventor: OZAKI Katsuhiko, Hyogo 651-2271 (JP); KATO Fumihiro, Hyogo 651-2271 (JP); SHOZAKI Tamotsu, Hyogo 657-0863 (JP); MOMOZAKI Kan, Hyogo 657-0863 (JP)
(74) Representative: Müller-Boré & Partner Patentanwälte PartG mbB
(86) International application number: PCT/JP2012/056271
(87) International publication number: WO 2012/128100

(56) References cited:
- EP-A1- 0 654 317
- EP-A1- 1 122 010
- EP-A1- 1 886 749
- DE-C1- 3 741 138
- GB-A- 908 061
- JP-A- 4 226 829
- JP-A- 53 021 484
- JP-A- 2003 225 703
- JP-A- 2003 225 703
- JP-B1- 33 004 721
- JP-U- 54 029 488
- JP-U- S57 118 128
- US-A- 3 055 102
- US-A- 3 142 228
- US-A- 3 443 305

## Description

### TECHNICAL FIELD

The present invention relates to a shaving tool used in a step of manufacturing a wire material to be used for a suspension bridge wire cable or a spring, the shaving tool for shaving a surface of the wire material.

### BACKGROUND ART

Since flaws such as a scale and a roll mark remain on a surface of a wire material, particularly of a steel wire material after a hot rolling step is completed, unevenness often exists. In order to smoothen such a surface of the wire material and improve quality of the surface, a surface layer over the entire circumference of the wire material is frequently cut and removed by a die shape shaving tool (for example, refer to Patent Documents 1 and 2).

In a shaving method of a wire material disclosed in JP 2007-283432 A, shaving is performed while a cooling liquid is jetted to a blade edge of a die from a plurality of jetting devices fixed at different positions from each other in which directions of nozzles are adjustable. Thereby, a cooling effect of the die is enhanced, heat generation is suppressed, and damage to the blade edge of the die is effectively suppressed. A shaving tool disclosed in JP H05-228729 A substantially harmoniously has abrasion resistance and toughness which are required in a shaving die for a relatively soft metal wire of copper, a copper alloy, or the like, and does not necessarily require coating which is conventionally considered as essential. In this shaving tool, a rake angle is 40° to 50° and a clearance angle is 3° to 10°. Thereby, the shaving tool having such a blade edge strength that crack and breakage due to a cutting force at the time of shaving processing are not generated and chip powder is smoothly discharged can be obtained.

However, with the shaving method disclosed in JP 2007-283432 A there is a need for a forced cooling device for bringing the cooling liquid into direct contact with the blade edge of the die, so that the method is complex. JP H05-228729 A discloses a blade edge shape of the shaving die for a relatively soft metal wire of copper, a copper alloy, or the like mainly from a view point of tool abrasion. However, the disclosure is not for a steel wire material which is harder than copper and a copper alloy. Smoothness of a cut surface after shaving is not taken into consideration at all.

While a surface layer of the wire material is cut and removed by the shaving tool, due to an influence of a remaining scale or unevenness of the surface, crack is sometimes generated on the blade edge of the shaving tool. When crack is generated on the blade edge, a processing mark (cutting mark) remains on the surface of the wire material and a processing force (cutting force) applied onto the blade edge is increased. Thus, there is a problem that the tool abrasion is remarkably developed and the tool life is shortened. Meanwhile, from a view point of improvement in the quality of the surface of the wire material, the surface of the wire material after shaving is desirably as smooth as possible.

US 3 142 228 A discloses a shaving tool according to the preamble of independent claim 1, configured as an annular die having a negative rake angle and a narrow surface provided behind a cutting edge.

### SUMMARY OF THE INVENTION

An object of the present invention is to provide a shaving tool which enhance smoothness of a surface of a wire material after shaving.

In order to achieve the above object, according to the invention a shaving tool according to claim 1 is provided. A preferred embodiment of the shaving tool is specified in dependent claim 2.

The shaving tool of the present invention is a shaving tool for shaving a surface of a wire material, in which a rake angle of a cutting blade of the shaving tool is within a negative range, and a flat surface of which clearance angle is zero is formed on a clearance surface of the shaving tool. The rake angle of the cutting blade is within a range from -5° to -30°, a flat surface length in the forward direction of the wire material is within a range from 0.1 to 1 mm, and a blade edge of the cutting blade has a radius of from 10 µm to 50 µm.

In a case where the rake angle of the cutting blade of the shaving tool is set within the negative range, and even in a case where center of the shaving tool and center of the wire material are slightly displaced at the time of shaving, a cutting component force is applied in the direction in which the cut material (wire material) is returned to the center of the shaving tool. Since this cutting component force is applied as a kind of aligning action, the wire material is not oscillated and unevenness of the surface of the wire material after shaving processing is reduced. Thereby, smoothness is enhanced and quality of the surface is improved. An effect of suppressing crack generation on a blade edge can also be obtained.

By the flat surface of which the clearance angle is zero, the flat surface being formed on the clearance surface of the shaving tool, an action of rubbing the processing surface of the wire material generated by the blade edge is exerted. Thus, an effect of reducing the unevenness of the surface of the wire material can be obtained. By the flat surface, together with the action of rubbing, an action of retaining the wire material immediately after shaving can also be obtained. Thus, an effect of further suppressing oscillation of the wire material can also be obtained.

When the rake angle is more than -5°, the above aligning action is substantially not obtained, and an effect of improving the quality of the surface due to reduction in the unevenness of the surface of the wire material after shaving is not obtained. When the rake angle is less than -30°, sharpness of the shaving tool is deteriorated. Thus, the quality of the surface of the wire material is lowered, cutting speed cannot be increased, and cutting efficiency is lowered. Meanwhile, when the flat surface length in the forward direction of the wire material is shorter than 0.1 mm, the action of rubbing the surface of the wire material and the action of retaining the wire material are lowered, and the effect of reducing the unevenness of the surface of the wire material and the effect of suppressing the oscillation of the wire material can hardly be exerted. When the flat surface length is longer than 1 mm, an increase in cutting resistance cannot be ignored. When the cutting resistance is increased, the processing force (cutting force) applied onto the blade edge is increased. Thus, the tool abrasion is remarkably developed and the tool life is shortened.

By forming the radius of the blade edge between 10 µm and 50µm, the crack generation on the blade edge during shaving can be suppressed. By increasing a roundness of this blade edge to some extent, a radiused surface (an R surface) can also substantially be formed on the clearance surface. Since this R surface exerts the action of rubbing the processing surface of the cut material (wire material) generated by the blade edge, the effect of reducing the unevenness of the surface of the wire material can also be obtained. When the blade edge radius is over 50 µm, surface roughness (unevenness) of the wire material after shaving is increased and the cutting resistance also is increased. When the blade edge radius is less than 10 µm, the R surface formed by this roundness does not rub the processing surface formed by the blade edge but the processing surface of the wire material remains as it is. Thus, the effect of reducing the unevenness of the surface of the wire material cannot be obtained. The action and the effect of suppressing the crack generation on the blade edge are lowered.

In the above shaving tool, preferably, the cutting blade is formed of cemented carbide, high-speed tool steel, or ceramics.

In the present invention, the cutting blade of the shaving tool is formed so that the rake angle has a negative value. Thereby, even in a case where radial center of the shaving tool and radial center of the wire material are slightly displaced during shaving, the cutting component force in the normal direction is applied in the direction in which the wire material is returned to the center of the shaving tool. As a result, the wire material is not oscillated during shaving, the unevenness of the surface of the wire material after shaving is reduced, smoothness is enhanced, and the quality of the surface is improved. Since the flat surface formed on the clearance surface exerts the action of rubbing the processing surface of the wire material generated by the blade edge, the effect of reducing the unevenness of the surface of the wire material is obtained. Further, by forming the roundness on the blade edge of the cutting blade, the action of rubbing the processing surface of the cut material (wire material) generated by the blade edge is exerted. Thus, the effect of reducing the unevenness of the surface of the wire material is obtained. Thereby, the crack generation on the blade edge during shaving can also be suppressed and the tool life is improved.

### BRIEF DESCRIPTION OF DRAWINGS

Fig. 1 is an explanatory view schematically illustrating shaving processing by a shaving tool of an embodiment of the present invention.
Fig. 2 is an explanatory view (front view) illustrating a shape of the shaving tool of Fig. 1.
Fig. 3 is an explanatory view schematically illustrating a shape of a cutting blade of the shaving tool of Fig. 1.
Fig. 4(a) is an explanatory view of a cutting component force applied onto a wire material during shaving processing of the conventional art; and Fig. 4(b) is an explanatory view of a cutting component force applied onto a wire material during shaving processing by the shaving tool of Fig. 1.
Fig. 5 is a diagram illustrating surface roughness of the wire material after shaving processing in a case where a rake angle of the cutting blade is changed.
Fig. 6 is a diagram illustrating surface roughness of the wire material after shaving processing in a case where a flat surface length of a clearance surface of the cutting blade is changed.
Fig. 7 is a diagram illustrating surface roughness of the wire material after shaving processing in a case where a blade edge roundness of the cutting blade is changed.

### DESCRIPTION OF EMBODIMENTS

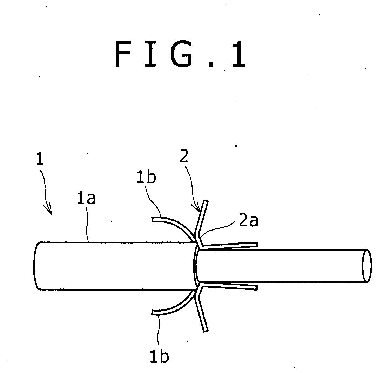

Hereinafter, an embodiment of the present invention will be described based on the attached Figs. 1 to 7.

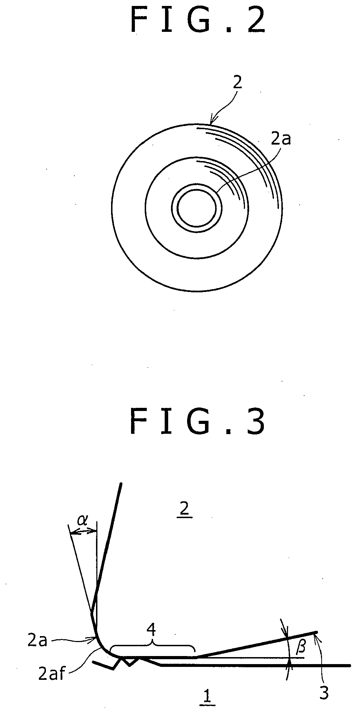

Fig. 1 is an explanatory view schematically illustrating shaving processing by a shaving tool of an embodiment. A steel wire material (hereinafter, referred to as the wire material) 1 serving as a cut material passes through a shaving tool 2 shaped as in Fig. 2 by a pulling force by a winding machine (not shown) arranged on the outlet side of the shaving tool 2 (on the right side in Fig. 1). A surface layer 1a of the wire material 1 is cut over the entire circumference by a cutting blade 2a. Surface flaws of the wire material 1 are removed together with chips 1b. The cutting blade 2a of the shaving tool 2 to shave a surface of the wire material 1 is formed so that a rake angle a has a negative value within a range from -5° to -30° as shown in Fig. 3. A blade edge 2af of the cutting blade 2a is formed in an arc shape with a radius from 10 µm to 50 µm. A flat surface 4 of which clearance angle β is zero is formed on the side near the blade edge 2af on a clearance surface 3. A length the flat surface 4 in the forward direction of the wire material 1 (in the left and right direction of Fig. 1) is 0.1 mm to 1 mm. This shaving tool 2 can be formed of cemented carbide, high-speed tool steel, or ceramics. As ceramics forming this shaving tool 2, pure alumina system and alumina to which other carbide or oxide such as Ti is added can be used.

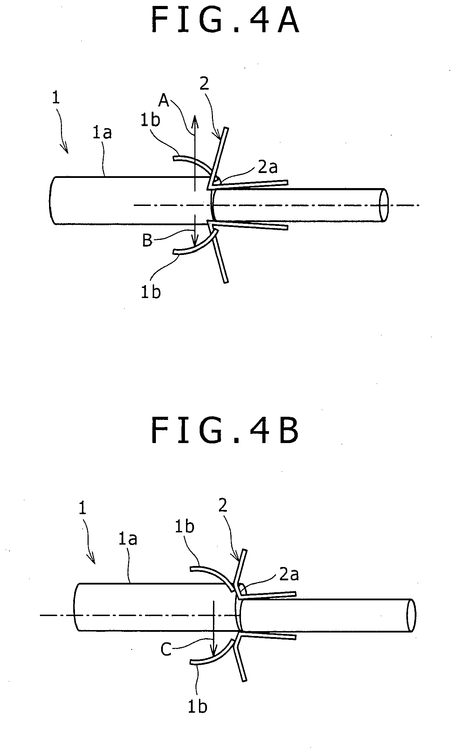

Fig. 4(a) illustrates a case where, in accordance with conventional techniques not falling within the scope of the invention, the rake angle α of the cutting blade 2a of the shaving tool 2 is set to zero or a positive value. In this case, when radial center of the shaving tool 2 and radial center of the wire material 1 are even only slightly displaced during shaving, only a cutting component force in the direction in which displacement is larger among cutting component forces in the normal directions shown by arrows A and B is increased (arrow A > arrow B). Therefore, the force of displacing the wire material 1 from the center of the cutting blade 2a is increased, so that stable shaving cannot be performed.

Meanwhile, Fig. 4(b) illustrates a case where the rake angle a of the cutting blade 2a of the shaving tool 2 is set to a negative in accordance with the invention. In this case, even when the radial center of the cutting blade 2a and the radial center of the wire material 1 are slightly displaced during shaving, a cutting component force is applied in the direction in which the wire material 1 is returned to the radial center of the shaving tool 2 as shown by an arrow C. Since the wire material 1 is not oscillated due to a kind of aligning action, unevenness of the surface of the steel wire material after shaving processing is reduced, smoothness is enhanced, and quality of the surface is improved. This is also effective for suppressing crack generation on the blade edge 2af of the cutting blade 2a.

### [Example]

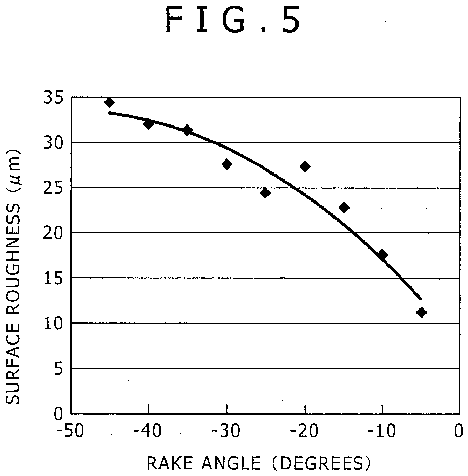

By using a shaving tool in which the rake angle a, the flat surface length of the clearance surface, and the roundness of the blade edge are respectively changed, shaving processing was performed on a surface layer of a spring steel wire material having a wire diameter of 6 mm. Surface roughness of the wire material after shaving processing was calculated by cutting simulation. Figs. 5 to 7 illustrate results thereof.

Fig. 5 plots surface roughness (unevenness) of the wire material after shaving in a case where the rake angle a of the shaving tool is changed within a negative range (-5° to -50°). The flat surface length of the clearance surface is zero and the radius of the blade edge is 50 µm (R50). From this result, it is found that as the rake angle a is reduced, that is, as an absolute value of a negative value is increased, the surface roughness tends to be increased. It is also found that when the rake angle a is less than -30°, the surface roughness of the wire material exceeds 30 µm which is an acceptable level in a case where the flat surface length of the clearance surface is zero. Meanwhile, in a case where the rake angle a is zero or a positive value, as described above, when the center of the shaving tool and the center of the wire material are even only slightly displaced during shaving, the force for displacing the wire material from the center of the shaving tool is increased, so that stable shaving cannot be performed.

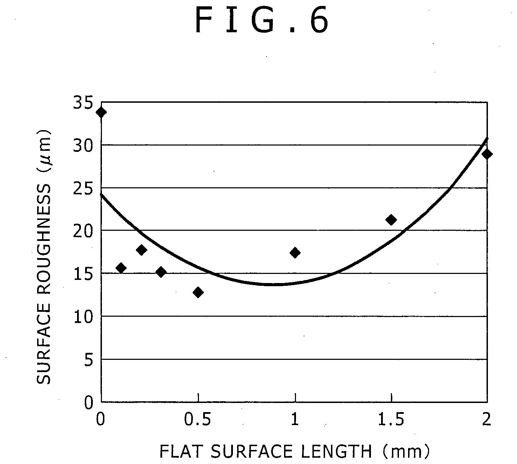

Fig. 6 plots surface roughness (unevenness) of the wire material after shaving processing in a case where the flat surface length of the clearance surface of the shaving tool is changed within a range from 0 to 2 mm. The rake angle a is -5° and the radius of the blade edge is 10 µm (R10). When the flat surface of which length is about 0.1 mm is formed on the clearance surface, the roughness of the processing surface of the wire material after shaving (surface roughness) is largely reduced in comparison to a case where no flat surface is formed (that is, a case where the flat surface length is zero). It is found that when the flat surface length exceeds 1 mm, the roughness of the processing surface (surface roughness) tends to be increased compared to a case where the flat surface length is as short as 0.1 mm.

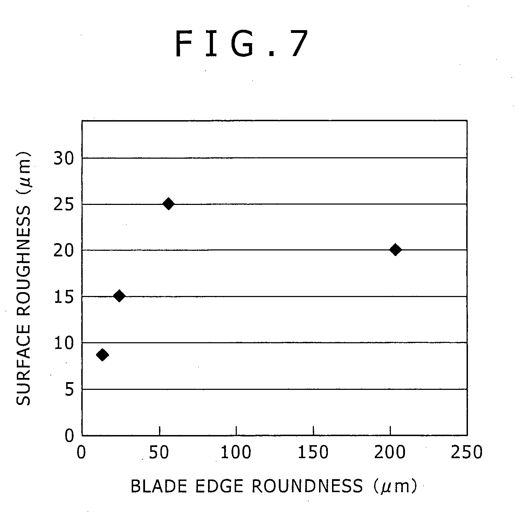

Fig. 7 plots surface roughness (unevenness) of the wire material after shaving processing in a case where the blade edge roundness of the shaving tool is changed within a range from µm to 200 µm. The rake angle a is -20° and the flat surface length of the clearance surface is zero. From this result, it is found that as the blade edge radius is increased, the surface roughness of the wire material is also increased. When the radius of the blade edge is increased to 50 µm, the surface roughness of the wire material comes near 30 µm which is the acceptable level and cutting resistance is also increased. In a case where the blade edge radius is as extremely large as 200 µm, the surface roughness of the wire material is 25 µm or less but the cutting resistance is increased and the processing force (cutting force) applied onto the blade edge is increased. In this case, tool abrasion is remarkably developed and the tool life is shortened.

Although an embodiment and example of the present invention are described above, the present invention is not limited to the above embodiment but can be variously changed and implemented within the scope of the attached claims.

### DESCRIPTION OF REFERENCE NUMERALS

- 1:: Wire material (steel wire material)
- 1a:: Surface layer
- 1b:: Chip
- 2:: Shaving tool
- 2a:: Cutting blade
- 2af:: Blade edge
- 3:: Clearance surface
- 4:: Flat surface

## Claims

1. A shaving tool (2) for shaving a surface of a wire material (1), wherein a rake angle (α) of a cutting blade (2a) of the shaving tool (2) is within a range of -5° to -30°, and a flat surface (4) of which the clearance angle (β) is zero is formed on a clearance surface (3) of the shaving tool (2), **characterized in that** the length of the flat surface in the forward direction of the wire material (1) is within a range from 0.1 to 1 mm, and
a blade edge (2af) of the cutting blade (2a) has a radius of from 10 µm to 50 µm.

2. The shaving tool (2) according to claim 1, wherein the cutting blade (2a) is formed of cemented carbide, high-speed tool steel, or ceramics.

## Patentansprüche

1. Schabwerkzeug (2) zum Schaben einer Oberfläche eines Drahtmaterials (1), wobei
ein Spanwinkel (α) einer Schneidklinge (2a) des Schabwerkzeugs (2) innerhalb eines Bereichs von -5° bis -30° liegt, und wobei eine flache Oberfläche (4), deren Freiwinkel (β) null beträgt, auf einer Freifläche (3) des Schabwerkzeugs (2) ausgebildet ist,
**dadurch gekennzeichnet, dass**
die Länge der flachen Oberfläche in der vorwärts gerichteten Richtung des Drahtmaterials (1) innerhalb eines Bereichs von 0,1 bis 1 mm liegt und
eine Schneid- bzw. Klingenkante (2af) der Schneidklinge (2a) einen Radius in einem Bereich von 10 µm bis 50 µm aufweist.

2. Schabwerkzeug nach Anspruch 1, wobei die Schneidklinge (2a) aus Sintercarbid, Schnellarbeitsstahl oder Keramik gebildet ist.

## Revendications

1. Outil de rasage (2) pour raser une surface d'un matériau de fil métallique (1), dans lequel
un angle de coupe (α) d'une lame de coupe (2a) de l'outil de rasage (2) est au sein d'une plage de -5° à -30°, et
une surface plate (4) dont l'angle de dégagement (β) est zéro est formée sur une surface de dégagement (3) de l'outil de rasage (2),
**caractérisé en ce que**
la longueur de la surface plate dans la direction avant du matériau de fil métallique (1) est au sein d'une plage de 0,1 à 1 mm, et
un bord de lame (2af) de la lame de coupe (2a) a un rayon allant de 10 µm à 50 µm.

2. Outil de rasage (2) selon la revendication 1, dans lequel
la lame de coupe (2a) est formée de cermet de carbure métallique, d'acier à outil haute vitesse ou de céramique.
